# EUROPÄISCHE PATENTSCHRIFT

(11) **EP 1 083 361 B1**
(45) Veröffentlichungstag und Bekanntmachung des Hinweises auf die Patenterteilung: **21.09.2005**
(21) Anmeldenummer: 00119249.1
(22) Anmeldetag: 06.09.2000
(51) Int. Cl.: F16F 9/53

(54) **Torsionsschwingungsdämpfer**
Torsional vibration damper
Amortisseur de vibrations de torsion

(30) Priorität: 09.09.1999 DE 19943085
(43) Veröffentlichungstag der Anmeldung: 14.03.2001
(73) Patentinhaber: CARL SCHENCK AG, 64293 Darmstadt (DE); BAYER AG, 51368 Leverkusen (DE)
(72) Erfinder: Pohl, Andreas, 64823 Gross-Umstadt (DE)
(74) Vertreter: Behrens, Helmut

(56) Entgegenhaltungen:
- EP-A- 0 933 240
- DE-A- 19 509 504
- DE-A- 19 717 691
- GB-A- 2 275 661
- PATENT ABSTRACTS OF JAPAN vol. 014, no. 135 (M-0949), 14. März 1990 (1990-03-14) & JP 02 003722 A (TOYOTA MOTOR CORP), 9. Januar 1990 (1990-01-09)

## Beschreibung

Die Erfindung betrifft einen Torsionsschwingungsdämpfer mit zwei gegeneinander begrenzt um eine gemeinsame Achse verdrehbaren Dämpferteilen, die über Elemente miteinander verbunden sind. Derartige Dämpfer werden in vielen Bereichen der Antriebstechnik innerhalb der Drehmomentübertragung eingesetzt. Ein wesentliches Einsatzgebiet hierfür ist die Kraftfahrzeugtechnik, wo solche Dämpfer insbesondere im Bereich der Kupplung zum Fernhalten von Motorschwingungen vom Getriebe eingesetzt werden.

Meist erzeugen allein die Elemente, die als elastische Elemente ausgebildet sind, die Dämpfungskräfte, so dass mit solchen Dämpfern ausschließlich ein fest eingestelltes Dämpfungsverhalten erreicht werden kann. Es sind auch Torsionsdämpfer bekannt, die zusätzlich zu den elastischen Elementen druckmittelgefüllte Kammern besitzen, die miteinander über eine Drosselstelle verbunden sind, deren Volumenverhältnis sich beim Verdrehvorgang ändert, so dass Druckmittel über die Drosselstelle von der einen in die andere Kammer gefördert wird. Dadurch wird zumindest ein Teil der Dämpfungsarbeit zur Gesamtdämpfung beigetragen. Auch solche Systeme besitzen eine voreingestellte Dämpfungskennlinie, die nicht ohne weiteres veränderbar ist.

Der Erfindung geht von einem Stand der Technik gemäß Oberbegriff des Anpruchs 1 aus, siehe GB-A-2 275 661. Bei diesem Stand der Technik läßt sich des Dämpfungsverhalten mit einfachen Mitteln auf kostengünstige Weise mit extrem kurzer Reaktionszeit variieren Elektrorheologische und magnetorheologische Flüssigkeiten verändern unter dem Einfluss elektrischer bzw. magnetischer Gleich- und Wechselfelder ihre Viskosität. Sie können dabei innerhalb weniger Millisekunden den Aggregatzustand zwischen flüssig und fest ändern. Dadurch sind Steuerungsvorgänge mit extrem hoher Dynamik möglich. Ihre rheologischen Eigenschaften können diese Flüssigkeiten stufenlos verändern. Sie bestehen aus in einem Trägermedium suspendierten Festpartikeln, welche über elektrische und/oder magnetische Felder polarisierbar sind.

Elektrorheologische und magnetorheologische Flüssigkeiten besitzen inhärente sensorische Eigenschaften, die sich vorteilhafterweise in praktischen Steuerungs- und Regelungsvorgängen nutzen lassen. So ist beispielsweise die Leitfähigkeit einer elektrorheologischen Flüssigkeit geeignet, den Abstand zwischen den Elektroden zu bestimmen und über die Messung elektrischer Stellgrößen ist es möglich, eine Information über die Fließgeschwindigkeit der elektrorheologischen Flüssigkeit zwischen den Elektroden zu erhalten. Die so erhaltenen Systeminformationen können nun wieder Eingang in die Steuerung bzw. Regelung finden.

Die Dämpfung des Torsionsschwingungsdämpfers kann in sehr weitem Bereich variiert werden, ohne dass hierzu bewegte Teile, wie beispielsweise Ventile oder verstellbare Klappen eingesetzt werden müssen.

Um den Aufbau des aus der GB-A-2 275 661 bekannten Torsionsdämpfers zu voreinfachen und ihm elastische Eigenschaften zu verleihen, wird erfindungsgemäß vorgeschlagen, dass die Elemente als elastomere Blöcke ausgebildet sind, die eine begrenzte elastische Verdrehung der Dämpferteile gegeneinander ermöglichen.

Eine vorteilhafte Ausgestaltung der Erfindung sieht einen in die Dämpfungskammer ragenden Strömungskörper vor, welcher beim verdrehen der beiden Dämpferteile relativ zueinander durch die elektro- und/oder magnetorheologische Flüssigkeit bewegt wird.

Durch Veränderung der Viskosität der Flüssigkeit läßt sich die Dämpfungskraft dem Anwendungsfall entsprechend bis zur kompletten Kopplung der beiden Dämpferteile einstellen.

Alternativ oder zusätzlich kann mindestens ein Dämpferteil als Verdrängungskörper ausgebildet sein, der beim Verdrehen der beiden Dämpferteile relativ zueinander das Volumen der Dämpfungskammer verändert. Dadurch wird die Flüssigkeit verdrängt oder angesaugt. Auch hier kann durch Veränderung der Viskosität durch elektrische oder magnetische Felder, die insbesondere im Bereich des Zu- bzw. Ablaufs der Flüssigkeit vorgesehen sind, die Dämpfungskraft in weiten Bereichen bis zur vollständigen Kopplung der beiden Dämpferteile variiert werden.

Weitere vorteilhafte Merkmale sowie die Funktion der Erfindung ergeben sich aus der nachstehenden Beschreibung von Ausführungsbeispielen anhand der Zeichnung.

Hierzu zeigt Fig. 1 einen Quer- und Fig. 2 einen Längsschnitt durch eine erste Ausführungsform der Erfindung, Fig. 3 und Fig. 4 zeigen jeweils eine zweite Ausführungsform der Erfindung im Längs- bzw. Querschnitt und die Fig. 5 und 6 stellen ein drittes Ausführungsbeispiel in Längs- bzw. Querschnitt dar.

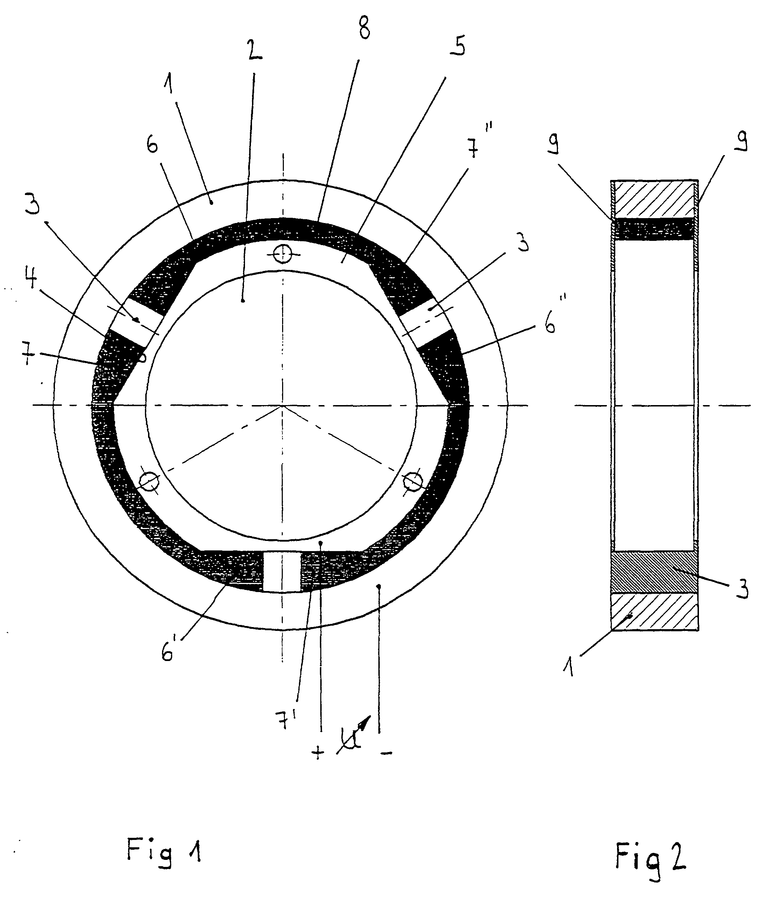

Gemäß Fig. 1 besitzt der Torsionsschwingungsdämpfer ein erstes Dämpferteil 1, welches einen rohrförmigen Querschnitt besitzt, und ein in diesem konzentrisch angeordnetes zweites Dämpferteil 2, welches einen dreiecksförmigen Querschnitt mit abgerundeten Ecken besitzt. Die beiden Dämpferteile 1,2 sind über insgesamt drei, jeweils auf den planen Flächen 4 des zweiten Dämpferteiles 2 angeordnete elastomere Blöcke 3 miteinander gekoppelt. Diese elastomeren Blöcke 3 gestatten ein begrenztes Verdrehen der beiden Dämpferteile 1,2 gegeneinander um die gemeinsame Längsachse. Eine solche Verdrehung führt zur elastischen Verformung der elastomeren Blöcke 3. Die elastomeren Blöcke 3 unterteilen den Raum zwischen der planen Fläche 4 und dem ersten Dämpferteil, der die Form eines Kreisabschnittes aufweist, in zwei Dämpfungskammern 6 und 7. Die abgerundeten Ecken 5 bilden jeweils zusammen mit der inneren Mantelfläche des ersten Dämpferteils 1 einen Drosselspalt 8, über welcher jeweils eine erste Dämpfungskammer 6, 6', 6'' mit einer zweiten Dämpfungskammer 7'', 7' bzw. 7 verbunden ist. In axialer Richtung werden die Dämpfungskammern 6, 7 durch ringförmige Abdichtungen 9 begrenzt, die einstückig mit den elastomeren Block 3 ausgebildet sind.

Die Dämpfungskammern 6,7 sind mit einer elektrorheologischen Flüssigkeit gefüllt und die sphärischen Begrenzungsflächen der Drosselspalte 8 sind in an sich bekannter Weise als Kondensatorflächen ausgebildet, welche jeweils mit einer Hochspannungsquelle U verbunden sind. In Abhängigkeit von der angelegten Spannung ist die Viskosität der sich zwischen den Kondensatorflächen befindlichen elektrorheologischen Flüssigkeit veränderbar.

Die Wechselwirkung zwischen der Elektrodenanordnung und der elektrorheologischen Flüssigkeit kann abhängig von der Art der Flüssigkeitsdeformation nach drei grundsätzlichen Moden unterschieden werden, dem Shear-Mode (Elektroden verschieben sich relativ zueinander in parallelen Ebenen), dem Flow-Mode (Elektroden sind fest angeordnet, die Flüssigkeit strömt zwischen den Elektroden hindurch) und dem Squeeze-Mode (Elektroden verändern ihren Abstand zueinander). Diese Moden können auch in Kombination auftreten. Näheres hierzu findet sich in dem Buch "Technischer Einsatz neuer Aktoren", Expert-Verlag, Renningen-Meinsheim, 1995, Kapitel 2.3.1 und Bild 3.1.

Wird nun beispielsweise das innenliegende zweite Dämpferteil 2 bei feststehendem ersten Dämpferteil 1 im Uhrzeigersinn ausgelenkt, so verkleinert sich jeweils das Volumen der DämpfungsKammern 7, 7', 7'' und die drin befindliche Flüssigkeit fließt über die Drosselstelle 8 in die jeweils zugeordneten ersten Dämpfungskammern 6', 6''und 6. Durch entsprechende Variation der angelegten Spannung an den genannten Kondensatorflächen, kann die Wirkung der Drosselstelle verändert werden. Die elektrorheologische Flüssigkeit wird dabei im sogenannten Flow-Mode beansprucht.

Durch Beaufschlagung der Kondensatorflächen mit einer entsprechenden Spannung, kann die elektrorheologische Flüssigkeit im Bereich der Drosselstelle 8 in einen festen Zustand gebracht werden, so dass eine starre Koppelung zwischen den beiden Dämpferteilen 1 und 2 möglich ist.

Es ist auch möglich, die Dämpfungskammern mit einer magnetorheölogischen Flüssigkeit zu befüllen und im Bereich der Drosselstelle 8 mittels geeigneter Vorrichtungen steuerbare magnetische Felder aufzubauen, die dann ebenfalls die Viskosität des Dämpfungsfluids verändern. Bei Befüllung mit einer Flüssigkeit, die sowohl elektrorheologische, als auch magnetorheologische Eigenschaften besitzt, sind auch Kombinationen von elektrischen als auch magnetischen Feldern zur Beeinflussung der Viskosität der Dämpfungsflüssigkeit möglich.

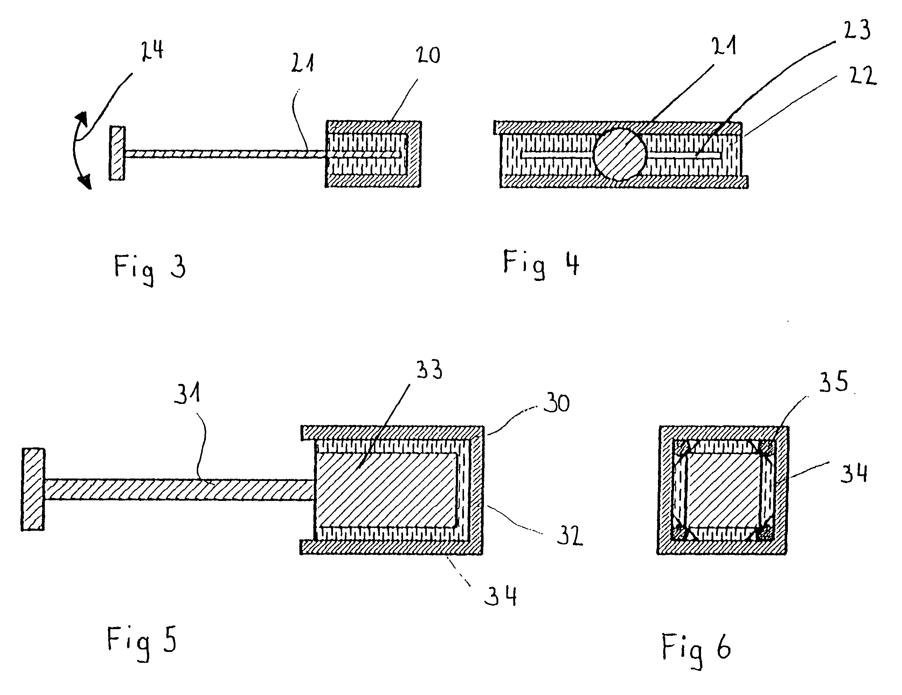

Das in den Fig. 3 und 4 dargestellte zweite Ausführungsbeispiel der Erfindung zeigt ein quaderförmiges erstes Dämpfungsteil 20, in dem ein zweites Dämpfungsteil 21 angeordnet und mit diesem reib- oder formschlüssig auf eine Weise verbunden ist, die eine begrenzte elastische Verdrehung der beiden Dämpferteile um eine gemeinsame Längsachse gestattet. Das erste Dämpferteil 20 bildet eine abgedichtete Dämpfungskammer 22, die mit einer elektrorheologischen Flüssigkeit gefüllt ist, und in welche ein Ende des in etwa stabförmig ausgebildeten zweiten Dämpferteils 21 hineinragt. Wie in Fig. 4 zu sehen ist, ist das in die Dämpferkammer 22 ragende Ende verdickt ausgeführt und begrenzt verdrehbar in nicht dargestellter, aber an sich bekannter Weise mit dem ersten Dämpferteil 20 verbunden. Darüberhinaus ist das sich in der Dämpferkammer 22 befindliche Ende mit paddelförmigen radial verlaufenden und diametral gegenüberliegenden Flügeln 23 versehen. Zwei gegenüberliegende Seiten des quaderförmigen ersten Dämpferteils 20 sind als Kondensatorplatten zum Anlegen einer elektrischen Spannung ausgebildet, um die Viskosität der elektrorheologischen Flüssigkeit in der Dämpfungskammer 22 verändern zu können.

Da beim Verdrehen des zweiten Dämpferteils 21 gegenüber den ersten Dämpferteil 20 die Flügel 23 als Strömungskörper durch die elektrorheologische Flüssigkeit in der Dämpfungskammer 22 bewegt werden und der Verdrehung einen von der Viskosität der elektrorheologischen Flüssigkeit abhängigen Widerstand entgegensetzen, kann durch Veränderung der an die Kondensatorplatten angelegten Spannung die Dämpfungskraft des beschriebenen Torisionsschwingungsdämpfers verändert werden. Da die Flügel 23 auch bei einer durch den Doppelpfeil 24 angedeuteten Schwenkbewegung der beiden Dämpferteile, 20,21 gegeneinander innerhalb der Dämpfungskammer 22 bewegt werden, kann durch entsprechende Viskositätssteuerung auch eine Schwingung um eine Querachse des Schwingungsdämpfers gezielt gedämpft werden.

Auch für das in den Fig. 5 und 6 dargestellte dritte Ausführungsbeispiel der Erfindung sind ein erstes und ein zweites Dämpferteil 30,31 begrenzt elastisch um eine gemeinsame Längsachse verdrehbar miteinander verbunden. Der Übersichtlichkeithalber ist diese Verbindung zeichnerisch nicht dargestellt. Das erste Dämpferteil 30 ist quaderförmig mit quadratischer Grundfläche 32 ausgebildet. In das erste Dämpferteil 30 hinein ragt der Endabschnitt 33 des zweiten Dämpferteils 31, der einen quadratischen Querschnitt aufweist. Im nichtausgelenkten Zustand verlaufen die planen Begrenzungsflächen des ersten Dämpferteils 30 und des Endabschnittes 33 parallel zueinander. Zwischen benachbarten parallelen Flächen des Endabschnitts 33 und des ersten Dämpferteils 30 werden vier Dämpfungskammern 34 gebildet, die in den Bereichen der Kanten der quadratischen Querschnitte durch Dichtungsmittel 35 voneinander abgetrennt sind.

Einander gegenüberliegende Flächen des Endabschnittes 33 und des ersten Dämpferteils 30 sind als sich zugeordnete Kondensatorplatten ausgebildet, und durch eine regelbare elektrische Quelle spannungsbeaufschlagbar. Dadurch kann auch gemäß dieser Ausführung die Viskosität der elektrorheologischen Flüssigkeit, mit welcher die Dämpfungskammern 34 befüllt sind, variiert werden. Bei einer Verdrehung der beiden Dämpferteile 30,31 relativ zueinander wird die Flüssigkeit in der Dämpfungskammer 34 deformiert und setzt der Verdrehung einen von der Viskosität der Flüssigkeit abhängigen Widerstand entgegen. Dieser Widerstand kann durch entsprechende Beaufschlagung der Kondensatorflächen variiert werden.

Auch bei der dritten Ausführungsform der Erfindung können auch Pendelschwingungen um eine Querachse des Schwingungstorsionsdämpfers gedämpft werden, da in einem solchen Falle die Flüssigkeit in den Dämpfungskammern 34 gewalkt wird und der Widerstand ebenfalls von der Viskosität der Dämpfungsflüssigkeit abhängt.

Für alle vorbeschriebenen Ausführungsbeispiele sind auch inverse Lösungen möglich, so daß ein Zapfen in eine Welle ragt und der Zapfen dann mit elektrorheologischer und/oder magnetorheologischer Flüssigkeit gedämpft wird.

Auch für die Ausführungsbeispiele gemäß Fig. 3 bis 6 gilt in bezug auf die Verwendung von magnetorheologischen oder elektro- und magnetorheologischen Flüssigkeiten das oben ausgeführte.

Bei allen Ausführungsbeispielen, bei denen der Flow-Mode zur Anwendung kommt, kann das Druckmedium, d. h. die elektrorheologische und/oder magnetorheologische Flüssigkeit, an einen externen Druckregelkreis angeschlossen werden. Dadurch wird sowohl Dämpferkraft als auch Dämpfersteifigkeit verändert, so daß Eigenformen von Systemen verändert werden können. Hierfür kann ein extern angeordnetes ansteuerbares Ventil auf Basis von elektrorheologischen und/oder magnetorheologischen Flüssigkeiten zwischen zwei Dämpfungskammern vorgesehen sein.

## Patentansprüche

1. Torsionsschwingungsdämpfer mit zwei gegeneinander begrenzt um eine gemeinsame Drehachse verdrehbaren Dämpferteilen (1, 2, 20, 21, 30, 31), die über Elemente (3) miteinander verbunden sind, wobei die Dämpferteile mindestens eine gemeinsame Dämpfungskammer (6, 7, 22, 34) begrenzen, die mit einer elektro- und/oder magnetorheologischen Flüssigkeit gefüllt ist, und wobei der Dämpfungskammer elektrische und/oder magnetische Mittel zum Beeinflussen der rheologischen Eigenschaften der Flüssigkeit zugeordnet sind, **dadurch gekennzeichnet, dass** die Elemente als elastomere Blöcke (3) ausgebildet sind, die eine begrenzte elastische Verdrehung der Dämpferteile gegeneinander ermöglichen.

2. Torsionsschwingungsdämpfer nach Anspruch 1, **dadurch gekennzeichnet, dass** mindestens an einem Dämpferteil (21) mindestens ein Strömungskörper (23) vorgesehen ist, der in die Dämpfungskammer (22) ragt.

3. Torsionsschwingungsdämpfer nach einem der vorhergehenden Ansprüche, **dadurch gekennzeichnet, dass** mindestens ein Dämpferteil (2, 33) als der Dämpfungskammer (6, 7, 34) zugeordneter Verdrängungskörper ausgebildet ist.

## Claims

1. Torsional vibration damper with two damper sections (1, 2, 20, 21, 30, 31), which may be twisted against each other to a limited degree around a common axis of rotation, and which are connected with each other via elements (3), with the damper sections restricting at least one common damping chamber (6, 7, 22, 34), which is filled with an electrorheological and/or magneto-rheological liquid, and in which electric and/or magnetic means are provided for the damping chamber in order to influence the rheological properties of the liquid, **characterised in that** the elements are designed as elastomer blocks (3), which enable a limited elastic torsion of the damper sections against each other.

2. Torsional vibration damper according to claim 1, **characterised in that** at least one flow body (23) which projects into the damping chamber (22) is provided on at least one damping section (21).

3. Torsional vibration damper according to one of the preceding claims, **characterised in that** at least one damping section (2, 33) is designed as a displacing body assigned to the damping chamber (6, 7, 34).

## Revendications

1. Amortisseur de vibrations de torsion avec deux sections d'amortissement (1, 2, 20, 21, 30, 31), pouvant subir une torsion limitée l'une par rapport à l'autre autour d'un axe de rotation commun, et qui sont liées l'une à l'autre par des éléments (3), les sections d'amortissement limitant au moins une chambre d'amortissement commune (6, 7, 22, 34), celle-ci étant remplie d'un fluide rhéoélectrique et/ou rhéomagnétique, où les milieux électrique et/ou magnétique sont fournis à la chambre d'amortissement en vue d'influer sur les propriétés rhéologiques du fluide, **caractérisé en ce, que** les éléments sont formés comme des blocs élastomères (3), qui permettent une torsion élastique limitée des sections d'amortissement l'une par rapport à l'autre.

2. Amortisseur de vibration de torsion conforme à la revendication 1, **caractérisé en ce, qu'**au moins un corps d'écoulement(23) en saillie dans la chambre d'amortissement (22) soit prévu sur au moins une section d'amortissement (21).

3. Amortisseur de vibration de torsion conformément à l'une des revendications antérieures, **caractérisé en ce, que** au moins l'une des sections d'amortissement (2, 33) soit configurée comme étant le corps déplaceur attribué à la chambre d'amortissement (6, 7, 34).
